# EUROPEAN PATENT APPLICATION

(11) **EP 2 801 399 A1**
(43) Date of publication of application: **12.11.2014**
(21) Application number: 13166797.4
(22) Date of filing: 07.05.2013
(51) Int. Cl.: B01D 63/04, B01D 65/02, B01D 65/10

(54) **Compact multi membrane vessel for water ultrafiltration**

(71) Applicant: Siemens Aktiengesellschaft, 80333 München (DE)
(72) Inventor: The designation of the inventor has not yet been filed

(57) **Abstract**

The present invention describes a filtration vessel (100) for at least partially removing a contaminant from a fluid. The vessel (100) comprises an inlet pipe (108) which is mounted to a first end cab (105) and to a supporting plate (106) of the vessel (100). The inlet pipe (108) comprises at least one slot (109) through which the fluid is injectable into an inner volume (Vi) of a vessel body (101). At least one membrane rod (110) comprising a plurality of membrane straws is mounted to the first through hole (107) of the supporting plate (106) such that the membrane rod (110) extends from the supporting plate (106) into the inner volume (Vi). The membrane rod (110) is formed such that the fluid is injectable from the inner volume (Vi) through a peripheral surface of the membrane rod (110) and through a peripheral surface of the membrane straws into the membrane straws and is further exhaustible through an axial rod end and through the first through hole (107) of the supporting plate (106).

## Description

### Field of invention

The present invention relates to a filtration vessel, in particular an ultrafiltration vessel, and to a method for operating the filtration vessel. Furthermore, the present invention relates to a method for cleaning a membrane element, such as a membrane rod comprising approximately 6100 to 6700 membrane straws, within the filtration vessel and to a method for detecting a defect membrane rod within a filtration vessel.

### Art Background

Ultrafiltration is employed to separate or remove particles larger than sizes of about e.g. 0,01 to 0,1 µm, depending upon the pore sizes of the ultrafiltration membrane material PVDF (Polyvinylidene fluoride) or other suitable material as graphen, in order to purify or to recycle a contaminated fluid flow. Ultrafiltration (abbreviation: UF) is a variety of membrane filtration in which typically hydrostatic pressure forces a liquid against a semipermeable membrane. Suspended solids and solutes of high molecular weight are retained, while water and low molecular weight solutes pass through the semipermeable membrane. The membranes may comprise pore sizes typically in the range of 0,1 to 0,01 micron. Ultrafiltration is within the range 0,1 to 0,01 µm.

Ultrafiltration allows to purify, separate, and concentrate target macromolecules in continuous flow systems. This is done by pressurising the flow of the contaminated fluid and guiding this pressurised contaminated fluid through an ultrafiltration membrane. The solvent and other dissolved components of the contaminated fluid that pass through the membrane are known as "permeate". The contaminated components that do not pass through the membrane pores are known as "retentate". Depending on the pore sizes of the membrane used in relation to the particle sizes, macromolecules may be purified, separated, or concentrated in either fraction.

In prior art products, water treatment is done by a plurality of ultrafiltration modules, each module may be substantially a cylinder comprising approximately 6100 to 6700 membrane straws. The membrane may be mainly of capillary and/or hollow fibre type. Each module may have its own housing with connectors for fluid supply or fluid drain.

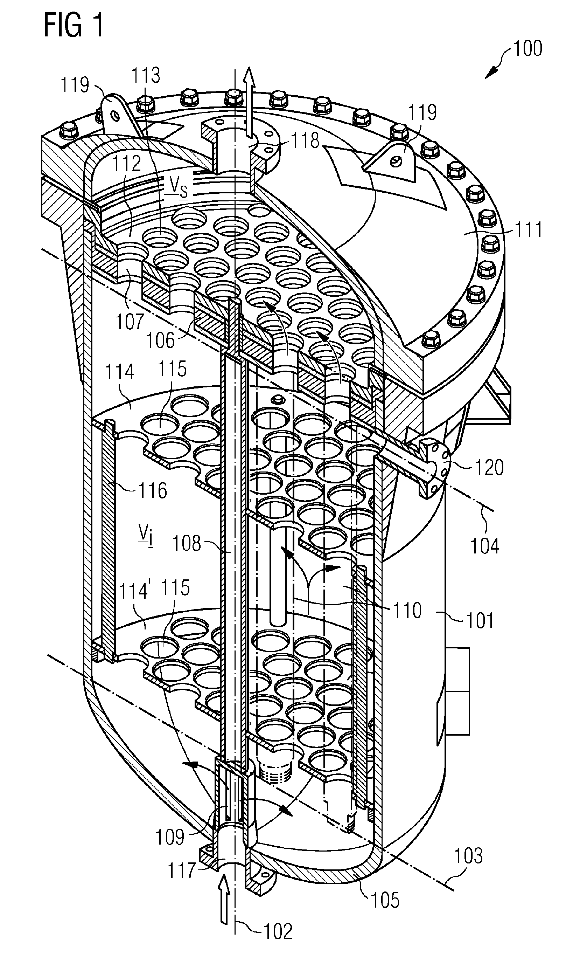

For industrial large scale filtration systems, e.g. for purifying a large amount of water, a plurality of these modules are provided for one filtration system. Typically they are arranged in rows and columns, typically in parallel configuration, each module having a separate inlet and outlet tubes to provide a fluid flow through the module. A typical arrangement can be seen schematically in Fig. 1.

To provide a sufficient filtration throughput, the overall filtration system requires a large filtering surface which can be reached by a necessary number of filtration modules. This may lead to a large footprint of the overall filtration system.

### Summary of the Invention

It may be an objective of the present invention to provide a filtration vessel which comprises a compact design with a smaller footprint and less weight and which is easy to handle also during cleaning and diagnostic procedures.

This objective may be solved by a filtration vessel for at least partially removing a contaminant from a fluid, by a method for operating a filtration vessel, by a method for cleaning a membrane within a filtration vessel and by a method for detecting a defect membrane rod within a filtration vessel.

According to a first aspect of the present invention, a filtration vessel for at least partially removing a contaminant from a fluid (e.g. wastewater) is presented. The filtration vessel comprises a vessel body which comprises a tubular and cylindrical section extending along a centre axis of the vessel body, wherein the centre axis defines an axial direction. The vessel body may comprise a cylindrical shape and comprises a first axial end and a second axial end which is located opposite with respect to the first axial end along the axial direction.

A first end cap is mounted to the first axial end and a supporting plate is arranged to the second axial end. The supporting plate comprises at least one first through-hole. The first end cap may be formed with the vessel body integrally or may be exchangeably mounted to the vessel body. The first end cap which is formed to the first axial end of the filtration vessel body forms a bottom section of the filtration vessel. The first end cap may comprise an elliptical parabolic shape or a straight plate-like shape.

The supporting plate is arranged at the second axial end of the tubular section of the vessel body. The supporting plate comprises one or a plurality of first holes into which respective membrane rods are mountable. Specifically, the membrane rods are fixed to the respective first through-holes and hang down from the supporting plate into the inner volume.

The axial rod end of the membrane rod is mounted to the first through-hole of the supporting plate such that the membrane rod extends from the supporting plate into the inner volume. The membrane rod is formed such that the fluid is injectable from the inner volume through a peripheral surface of the membrane rod into the membrane rod and is further exhaustable through the axial rod end and through the first through-hole of the supporting plate.

The membrane rod may comprise a tube-like shape comprising approximately 6100 to 6700 membrane straws (i.e. hollow membrane tubes), wherein the membrane straws comprise at their peripheral surface membrane pores with a predefined pore size, e.g. in the range of approximately 0,1 to 0,01 micron. Hence, the fluid comprising the contaminant may flow against the peripheral surface of the membrane rod and its membrane straws respectively, wherein only the fluid (liquid, such as water) and molecules or particles which are smaller than the contaminant molecules or particles and the fluid itself may pass the peripheral surface and flow inside the membrane straws. The contaminant molecules or particles are filtered out by the peripheral surface of the membrane straws and remains a retentate in the inner volume. The filtration straws may be in cylindrical form and may be built from extruded PVDF (PolyVinliDene Fluorid) or other materials like graphen fibres to provide the filtering effect. Preferably the contaminated fluid is provided to the filtration membrane straws via its cylindrical (peripheral) side surface such that the fluid can pass (without the to be filtered contaminant particles) radially inwards into the hollow body of the filtration straws.

From the membrane straws, the treated fluid flows without or with a reduced amount of the contaminant to the axial straw end of the membrane straw and flows further through the first through-hole of the supporting plate out of the inner volume.

The membrane straws are packed within the membrane rod. At least at an axial end section, a glue, such as resin, is filled inside the membrane rod and between adjacent membrane straws. Hence, by the glue, the membrane straws are fixed inside the membrane rod and a fluid flow between adjacent membrane straws is prevented.

The inlet pipe is mounted to the supporting plate and to the first end cap, e.g. the bottom surface of the vessel body. The inlet pipe reinforces and holds the supporting of the supporting plate to the vessel body. Furthermore, the inlet pipe according to the present invention further comprises the function of injecting the contaminated fluid into the inner volume. Hence, the inlet pipe combines two functions, firstly the reinforcement of the inner structure of the vessel body and secondly the injection of the contaminated fluid in the inner volume. Hence, by using the inlet pipe with the respective slots, no further inlet manifolds and inlet valves are necessary for injecting the contaminated fluid into the inner volume. Hence, a compact design with a reduced number of parts and less weight of the filtration vessel is achieved.

Furthermore, by using the slots within the inlet pipe, a high amount and a high volume flow of the contaminated fluid may be injected into the inner volume without reducing significantly the strength and the robustness of the inlet pipe. This is in particular achieved by forming the slot in such a way that the slot extends within the inlet pipe along the axial direction. Hence, axial forces between the supporting plate and the first end cap along the axial direction may be properly transferred by the material of the inlet pipe between the slots. In other words, by forming the slots with an extension along the axial direction, the slots may comprise a large axial extension but may be formed narrower (i.e. with a smaller clearance, gap) along a circumferential direction without reducing the amount of injected contaminated fluid into the inner volume.

In operation of the filtration vessel, the contaminated fluid is injected by the slots in the inlet pipe under pressure. By the arrangement of a certain amount of slots around the circumferential direction, a desired distribution of the contaminated fluid is provided. As an example, a the operating pressure of the contaminated fluid within the inner volume may be within a range of approximately 6 bar (i.e. 6 * 105 Pa) to approximately 25 bar above the atmospheric pressure, in particular 17 to 19 bar above the atmospheric pressure.

According to a further exemplary embodiment of the present invention, the filtration vessel comprises a second end cap which is mounted to the second axial end such that the storage volume between the supporting plate and the second end cap is generated. Hence, in the storage volume, a fluid which has already passed the membrane rods is stored temporary before discharged further to other consumption in the storage volume. This decontaminated treated fluid may be used for example for a method of cleaning the membrane straws within the membrane rods as described below. The decontaminated treated fluid inside the storage volume may be using as back-flushing medium for flushing the membranes straws in a cleaning procedure. The second end cap may be formed such that the storage volume comprises three times the volume of the sum of the inner volumes of the respective membrane straws and the respective membrane rods, respectively, to be cleaned. Hence, sufficient storage volume is provided for having enough decontaminated fluid for cleaning the membrane rods.

Hence, for cleaning purposes, it is not necessary to inject an extra additional fluid, such as cleaning water. It is sufficient to use the decontaminated fluid from the storage volume.

In this respect, the second end cap may be formed with a shape of an elliptic parabolid for forming the storage volume.

According to a further exemplary embodiment, the filtration vessel comprises a retainer plate comprising at least one second through-hole which is smaller than the first through-hole of the supporting plate and smaller than a diameter of the membrane rod. The retainer plate is arranged and formed with respect to the supporting plate such that the first through-hole and the second through-hole are concentric.

By the term "concentric" it is in particular meant that the projection areas of the first through-hole and the second through-hole which are projected with a projection direction along the centre axis onto a plane are concentric.

The retainer plate may be mounted onto the supporting plate such that decontaminated fluid which flows through the first through-hole of the supporting plate through the second through-hole of the retainer plate and further e.g. into the storage volume. Because the second through-hole of the retainer plate is smaller than the diameter of the respective membrane rods, the retainer plate retains the membrane rods from moving along the axial direction. This may be caused due to the pressure of the contaminated fluid inside the inner volume. The function of the retainer plate is to prevent the membrane rods to be pressed out of the recesses (first through holes) in the supporting plate and give an option to inspect the integrity of the individual membrane rods doing an integrity test.

According to a further exemplary embodiment, the filtration vessel comprises a distribution plate which is arranged within the vessel body and spaced apart from the supporting plate along the axial direction. The distribution plate comprises at least one third through-hole which is larger than the first through-hole of the supporting plate and larger than a diameter of the membrane rod. The distribution plate is arranged and formed within with respect to the supporting plate such that the first through-hole and the second through-hole are concentric, wherein the membrane rod is inserted through the third through-hole.

Because the diameter of the third through-hole is larger than the diameter of the membrane rod, the small gaps between the peripheral surface of the membrane rod and the distribution plate are provided. Hence, contaminated fluid may pass the distribution plate along the axial direction. However, if vibrations or movements of the membrane rods occur, the distribution plate damps the membrane rods and an undesired movement of the membrane rods is prevented.

According to a further exemplary embodiment, a fixing ring is mounted to the second axial end of the vessel body, wherein the fixing ring is further mounted to the supporting plate for mounting the supporting plate to the vessel body. Furthermore, the fixing ring may be adapted for additionally fixing the retainer plate to the supporting plate. Hence, the supporting plate may be directly fixed by the fixing ring to the vessel body such that the supporting plate is independently supportable to the vessel body from the second end cap. Hence, the second end cap may be removed and the supporting plate may be still fixed to the vessel body. Hence, for diagnostic tests of the membrane rods, the second end cap may be removed such that the supporting plate and the respectively mounted membrane rods are accessible during test procedures.

According to a further exemplary embodiment, the filtration vessel comprises a ring element which is mounted to the second axial end of the vessel body. The ring element surrounds the supporting plate and the retainer plate and forms an edge around the supporting plate such that a liquid is storable inside a volume formed by the edge and the supporting plate.

Hence, the outer surface of the supporting plate and retaining plate may be covered by the liquid, e.g. a cleaning liquid such as water. Hence, if for example the below described method for detecting a defect of a membrane rod and its straws, respectively, is accomplished, air bubbles leaving a defect membrane rod may be visible and a defect membrane rod may be detected easily.

In the following, various methods which may be conducted by the above-described filtration vessel are described:
According to a first exemplary aspect, a method for operating a filtration vessel as described above is described. According to the method, the fluid is injected through the at least one slot of the inlet pipe into the inner volume of the vessel body. Hence, a pressure of the fluid inside the inner volume is increased (e.g. up to approximately 18 bar) so that the pressure inside the inner volume is higher than the pressure inside a further inner volume of the respective membrane rods and its membrane straws, respectively.

Hence, the fluid is pressed and permeates from the inner volume through the peripheral surface of the membrane rod and its membrane straws, respectively into the further inner volume of the membrane rod and its membrane straws, respectively.

The fluid is subsequently exhausted through the axial rod/straw end of the membrane rod and further through the first through-hole of the supporting plate.

The fluid which is exhausted through the first through-hole of the supporting plate is a treated and decontaminated fluid (permeate) which is free (or almost free) of contaminants and larger molecules, respectively, which have been filtered by the membrane rod.

According to a second exemplary aspect, a method for cleaning a membrane within a filtration vessel as described above is presented.

According to the cleaning method, a cleaning liquid within the storage volume which is located at an opposite side of the supporting plate with respect to the inner volume is stored. Air is injected into the storage volume, such that the cleaning liquid is pressed to the first through-hole of the supporting plate and further through the axial rod end of the membrane rod into the rod end and its membrane straws, respectively. The cleaning fluid is exhausted through the peripheral surface of the membrane rod and its membrane straws, respectively, into the inner volume of the membrane body. Hence, by pressing the cleaning liquid, such as water, through the peripheral surface of the membrane rod and its membrane straws, respectively, into the inner volume, the contaminant which has been filtered from the fluid in a foregoing operation procedure of the filtration vessel is removed from the surface of and pores in the membrane straws.

The cleaning liquid may be drained off from the inner volume for example by draining off the liquid through the slots of the inlet pipe out of the inner volume.

According to a third exemplary aspect, a method for detecting a defect membrane rod within a filtration vessel as described above, is presented.

According to the detecting method, a liquid is stored within the storage volume which is located at an opposite side of the supporting plate with respect to the inner volume. Air is injected into the inner volume of the vessel body. An appearance of air bubbles within the liquid is detected, wherein the appearance of air bubbles is indicative of a defect membrane. Hence, if the membrane rod is defect, air is permeable through the peripheral surface e.g. by cracks or gaps in a broken peripheral surface of the membrane straws within the membrane rod.

The above described filtration vessel may be used for a microfiltration or ultrafiltration.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a schematical view of a filtration vessel according to an exemplary embodiment of the present invention.
Fig. 2 shows a detailed exploded view of an upper section of the filtration vessel shown in Fig. 1 according to an exemplary embodiment of the present invention;
Fig. 3 shows an exemplary embodiment of a supporting plate hook; and
Fig. 4 shows a schematical view of a membrane tool according to an exemplary embodiment of the present invention.

### Detailed Description

The illustrations in the drawings are schematical. It is noted that in different figures, similar or identical elements are provided with the same reference signs.

Fig. 1 shows a filtration vessel 100 for at least partially removing a contaminant from a fluid (e.g. wastewater). The filtration vessel 100 comprises a vessel body 101, a first end cap 105, a supporting plate 106, an inlet pipe 108 and at least one membrane rod 110.

The vessel body 101 comprises a tubular, cylindrical section extending along a centre axis 102 of the vessel body 101. The centre axis 102 defines an axial direction. The vessel body 101 comprises a first axial end 103 and a second axial end 104. The second axial end 104 is located opposite with respect to the first axial end 103 along the axial direction 102. The first end cap is mounted to the first axial end 103. The first end cap 105 may be integrally formed with the vessel body 101 or may be detachably coupled to the vessel body 101.

The supporting plate 106 is arranged to the second axial end 104, wherein the supporting plate 106 comprises at least one first through-hole 107. As shown in Fig. 1, the supporting plate 106 comprises a plurality of first through-holes 107.

Furthermore, in the respective first through-holes 107, membrane rods 110 are mounted with the axial rod end to the first through-holes 107 of the supporting plate 106, such that the membrane rods 110 extend from the supporting plate 106 into an inner volume Vi of the vessel body 101.

The inlet pipe 108 is mounted to the first end cap 105 and to the supporting plate 106. The inlet pipe 108 comprises at least one slot 109 from which the fluid is injectable into the inner volume Vi of the vessel body 101.

The membrane rod 110 is formed such that the fluid is injectable from the inner volume Vi through a peripheral surface of the membrane rod 110 inside the membrane rod 110. Inside the membrane rod, a plurality of membrane straws are arranged, wherein the membrane straws comprise at their peripheral surface membrane pores with a predefined pore size for filtering the fluid. Furthermore, the fluid is exhaustable through the axial rod end (i.e. an axial rod end of the membrane straws within the membrane rod 110) and through the first through-hole 107 of the supporting plate 106 outside of the inner volume Vi.

The slots 109 of the inlet pipe 108 are distributed around a circumferential direction around the centre axis 102. Furthermore, each slot 109 extends along the centre axis 102.

In particular, the first end cap 105 defines a bottom section of the vessel body 101 and the supporting plate 106 defines a top section of the vessel body 101. Hence, the fluid is injected through the slots 109 into the inner volume Vi and is further pumped along a vertical (i.e. axial) direction up to the supporting plate 106 within the respective membrane rods 110. Hence, the contaminant, which is filtered by the pores within peripheral surface of the membrane straws of the membrane rod 110, sinks to the ground, i.e. to the first end cap 105, due to gravity.

Hence, by the configuration as shown in Fig. 1, the membrane rods 110 are fixed to the supporting plate 106 such that the membrane rods 110 hang down from the supporting plate 106. O-rings on the membrane element top potting are tightening between the supporting plate recesses, i.e. the first through holes 107.

The inlet pipe 108 comprises a fluid inlet 117 through which the contaminated fluid is injected. The inlet pipe 108 comprises a slot section, into which the slots 109 are formed. The slot section comprises a first diameter (width). Furthermore, between the slot section and the fixation of the inlet pipe 108 at the supporting plate 106 the inlet pipe 108 comprises a further section which comprises a second diameter. The second diameter is smaller than the first diameter of the slot section

The arrows in Fig. 1 denote the flow direction of the fluid through the filtration vessel 100.

At the top section, i.e. the second axial end 104 of the vessel body 101, a second end cap 111 is mounted. The second end cap 111 may be formed for example with a shape of an elliptic parabolid as shown in Fig. 1. Hence, a storage volume Vs between the supporting plate 106 and the second end cap 111 is generated. The fluid which is filtered from the contaminant flows from the inside of the membrane straws through the first through-holes 107 of the supporting plate 106 into the storage volume Vs. From the storage volume Vs, the filtered fluid is bled off from the filtration vessel 100 through a fluid outlet 118.

Hence, during operation of the filtration vessel 100, the filtered fluid is stored in the storage volume Vs before being exhausted to the fluid outlet 118.

After the operation method of the filtration vessel 100 is finished, a cleaning method may be accomplished for cleaning the vessel 100. First, a back-washing process may be conducted. The membrane vessel 100 is partly drained to a level above the upper distribution plate 114.

Next, low pressurized air is injected through the fluid inlet 117 such that the pressurized air causes turbulences in the cleaning water inside the inner volume Vi. In particular, the turbulent water/air mixture fills the complete inner volume Vi and thereby washes and cleans the outer peripheral surfaces of the membrane rod 110 and the membrane straws, respectively. While the pressurized air is scouring the membranes 110 and straws from the outside, higher pressure air is injected from the top of the vessel through nozzle 118 flushing the water volume in storage volume Vs back into the vessel volume Vi. This is the key to remove foulant from the membrane straw surface. The water/air mixture into which the contaminant particles from the peripheral surfaces are solved, is drained off through the further fluid outlet 120. The pressurized air is injected through the fluid inlet 117 for example between 40 and 60 seconds for scouring the membrane rods and the membrane straws, respectively.

Next, the contaminated cleaning water is drained off after the flushing time ends through the fluid inlet 117 out of the inner volume Vi.

After the above described flushing method of the filtration vessel 100, a further cleaning method may be accomplished for cleaning the membrane straws within the membrane rods 110 inside the filtration vessel 100. The filtered fluid which is stored in the storage volume Vs can be used as a cleaning liquid for the cleaning method. Therefore, through the fluid outlet 118 or through a separate air inlet, air is injected into the storage volume Vs such that the pressure of the fluid within the storage volume Vs is larger than the air or fluid pressure inside the inner volume Vi. Hence, the cleaning liquid is pressed through the first through-holes 107 of the supporting plate 106 and further through the axial rod end of the membrane straws of the membrane rod 110. Next, by the pressure difference, the cleaning fluid is exhausted through the peripheral surface of the membrane straws of the membrane rod 110 into the inner volume Vi of the vessel body 101. By exhausting the cleaning liquid through the peripheral surface of the membrane straws, the contaminants which are collected outside of the membrane straws and blockades the pores of the peripheral surface of the membrane straws in the membrane element 110 is washed out into the inner volume Vi. The cleaning fluid and the contaminant may further be guided out of the inner volume Vi through the fluid inlet 117. Hence, also for cleaning the membrane straws of the membrane rods 110 it is not necessary to provide a separate cleaning fluid inlet which is coupled e.g. to a cleaning fluid storage. Hence, a compact filtration vessel system may be formed.

Furthermore, as shown in Fig. 1, the filtration vessel 100 may comprise distribution plates 114, 114' which are arranged within the vessel body 101 and spaced apart from the supporting plate 106 along the centre axis 102. The distribution plates 114, 114' comprise a plurality of third through-holes 115 which are larger than the first through-hole 107 of the supporting plate 106 and larger than a diameter of the membrane rods 110. The distribution plates 114, 114' are arranged and formed with respect to the supporting plate 106 such that the first through-holes 107 and the respective through-holes 113 are concentric, such that the membrane rods 110 are inserted through the third through-holes 115. Hence, contaminant fluid may pass the distribution plates 114, 114'. Additionally, the distribution plates 114, 114' reduce a movement and a vibration of the membrane rods 110 in particular along a lateral direction with respect to the centre axis 102.

The distribution plates 114, 114' may be mounted spaced apart from each other to the wall section of the vessel body 101. Additionally, distance rods 116 may be attached between the respective distribution plates 114, 114'.

The lower distribution plate 114' allows different fluids (air and water) to enter into the central vessel body 101. The upper distribution plate 114 redistributes the different fluids inside the inner volume Vi. The two distribution plates are kept separate with distance rods 116. The distance between the distribution plates 114, 114' is optimized with respect to cleaning efficiency during the cleaning method and with respect to a filtering efficiency during the filtering operation of the vessel 100. Specifically, a surprising efficient and good cleaning and filtration effect has been found out for a predefined distance between the lower distribution plate 114' and the upper distribution plate 114, because a beneficial circulation of the cleaning water or the fluid to be decontaminated is the given. For example, if a length L is defined between the supporting plate 106 and the lower distribution plate 114', the optimal distance between the upper distribution plate 114 and the lower distribution plate 114' is approximately 4/9 of the length L.

The design of the distribution plates 114, 114' is developed by CFD- (Computational fluid dynamics)- investigation. Specifically, the underneath of the respective distribution plates 114, 114' may be curved as an elliptic parabolid, for example.

Furthermore, as can be taken from Fig. 1, lifting lugs 119 may be formed to the second end cap 111 such that the second end cap 111 is liftable by a crane, for example.

Furthermore, a retainer plate 112 is shown, which comprises second through-holes 113. The second through-holes 113 are smaller than the first through-holes 107 of the supporting plate 106 and smaller than a diameter of the membrane rods 110. The retainer plate 112 is arranged and formed with respect to the supporting plate 106 such that the first through-holes 107 and the respective through-holes 113 are concentric. Hence, the membrane rods 110 may not move along the centre axis 102 in the direction to the second end cap 111, even if the pressure in the inner volume Vi is higher than the pressure in the storage volume Vs.

Furthermore, the vessel body 101 comprises a further fluid outlet 120 through which a fluid may be exhausted from the inner volume Vi before being filtered by the membrane rods 110.

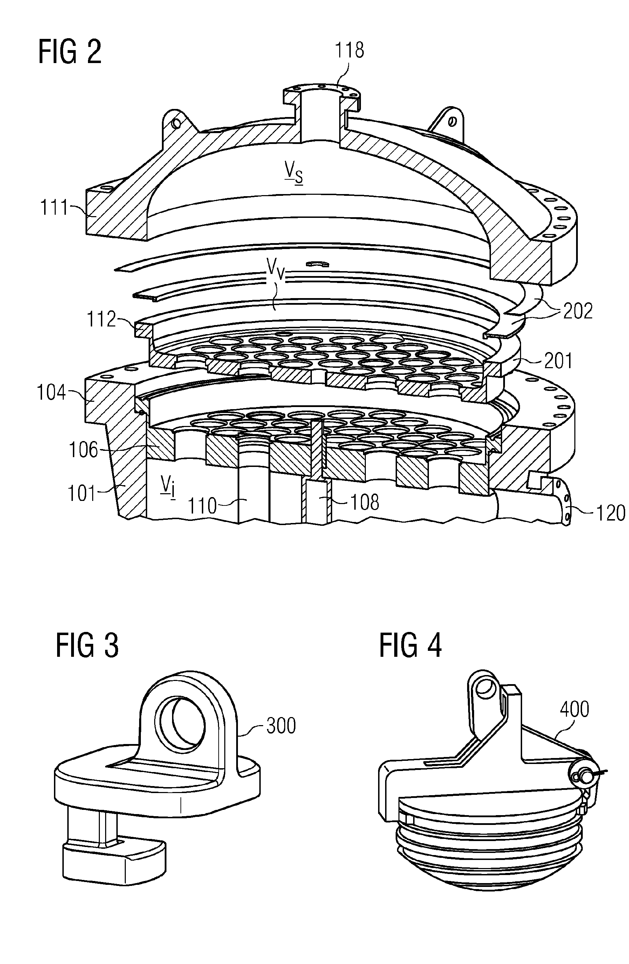

Fig. 2 shows an exploded view of a top section of the filtration vessel 100 which is similar to the top section of the filtration vessel 100 as shown in Fig. 1.

In Fig. 2, it is shown that the inlet pipe 108 is fixed to the supporting plate 106, such that the inlet pipe 108 is used as a stiffening element and fixation element for fixing the supporting plate 106 relative to the bottom section of the filtration vessel 100, i.e. to the first end cap 105. As shown in Fig. 2, the inlet pipe 108 comprises a hollow section even in the pipe section between the supporting plate 106 and the slotted section of the inlet pipe 108.

Furthermore, Fig. 2 shows a membrane rod 110 which is mounted in a first through-hole 107 to the supporting plate 106. On top of the supporting plate 106, the retainer plate 112 comprising the second through-holes 113 is arranged. The retainer plate 112 and the supporting plate 106 are fixed to a flange of the second axial end 104 by respective fixing rings 202. Hence, the second end cap 111 may be detached from the second axial end 104, wherein the supporting plate 106 together with the membrane rods 110 are still fixed to the vessel body 101.

Hence, a test procedure may be conducted, wherein the second end cap 111 may be removed and the top surface of the retainer plate 112 and the supporting plate 106 becomes visible and accessible.

Furthermore, the supporting plate 106 and/or the retainer plate 112 may comprise an edge 201 such that a volume Vv is generated which is surrounded by the edge and the upper surface of the retainer plate 112 and/or the supporting plate 106.

Into the volume Vv a liquid may be filled. Hence, a method for detecting a defect of a membrane straw of the membrane rod 110 which is installed into the supporting plate 106 may be conducted. Air is injected into the inner volume Vi of the vessel body 101 such that the air pressure in the inner volume Vi is higher than the pressure of the air surrounding the filtration vessel 100.

Hence, through cracks and gaps of a peripheral surface of a damaged membrane straw, air may flow through the damaged membrane straw and further through the first through-holes 107 and the second through-holes 113. The air generates air bubbles in the liquid located within the volume Vv. The air bubbles are visible by an inspector, such that a damaged membrane straw may be identified in an easy and fast manner.

Fig. 3 shows an exemplary embodiment of a supporting plate hook 300. By the supporting plate hook 300, the supporting plate 106 may be grabbed and exchanged in an easy manner.

Accordingly, Fig. 4 shows a membrane tool which provides an easy grabbing of a part of the membrane rod 110.

In the following, an exemplary procedure by applying the method for detecting a defect membrane rod is described:
First, the filtration vessel 100 is shut down and the contaminated fluid is drained off from the inner volume Vi.
Next, the filtration vessel 100 is isolated by attaching with manual isolation valves to the fluid inlet 117 and/or the fluid outlet 118. Next, the second end cap (i.e. the top end cap) is removed by entering slings through the lifting lugs 119. A centre ring, i.e. the fixing ring 202, attached to the second axial end 104 of the vessel body 101 keeps the supporting plate 106 and/or the retainer plate 112 in position during testing.

Next, the inner volume Vi of the vessel body 101 is filled with pressurized air, e.g. 0,3 barg (approximately 1,3 bar). The air pressure inside the inner volume Vi is held and kept constant e.g. for 20 min.

Potable water from e.g. a utility station is filled in the volume Vv in the upper part of the vessel, wherein the volume Vv is formed by the edge 202, which has approximately a height of approximately 2 cm above the supporting plate 106 and the retaining plate 112.

Next, it is observe and marked out from which first through holes 107 air is bubbling up. The membrane rod elements 110 underneath the bubbling first through hole 107 are the defect membrane rod elements 110 which comprises broken membrane straws that let through the air.

Next, the inner volume Vi of the vessel body 101 is depressurize by removing the pressure air. The fixation ring 202 is unbolted and removed. Next, the supporting plate 106 and the retaining plate 112 are removed by using the supporting plate hook 300. The defect membrane rod elements 110 are removed by using the UF membrane tool 400 and replace the membrane rod elements 110 with new elements.

Before conducting the method for detecting a defect membrane straw an operation of the filtration vessel is stopped and the membrane straws are backwashed, e.g. by conducting the above described method for cleaning a membrane rod and its straws. Hence, after cleaning the membrane rods 110 and its straws, it is then safe to remove the membrane rods 110 because a risk of intoxication due to the contaminants is reduced. After detection of damaged membrane straw and after the supporting plate 106 is removed, the membrane rod elements 110 comprising the defect straws are lifted and held for a several time period, so that the potable water can drop off into the filtration vessel 100. Next the broken membrane rod elements 110 can be removed.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Filtration vessel (100), in particular an ultrafiltration vessel, for at least partially removing a contaminant from a fluid, the filtration vessel (100) comprising:
a vessel body (101) which comprises a tubular section extending along an axial direction (102) of the vessel body (101),
wherein the vessel body (101) comprises a first axial end (103) and a second axial end (104), wherein the second axial end (104) is located opposite with respect to the first axial end (103) along the axial direction,
a first end cap (105) which is mounted to the first axial end (103),
a supporting plate (106) which is arranged at the second axial end (104),
wherein the supporting plate (106) comprises at least one first through hole (107),
an inlet pipe (108) which is mounted to the first end cab (105) and to the supporting plate (106),
wherein the inlet pipe (108) comprises at least one slot (109) through which the fluid is injectable into an inner volume (Vi) of the vessel body (101), and
at least one membrane rod (110) comprising an axial rod end, wherein the membrane rod (110) comprises a plurality of membrane straws,
wherein the axial rod end is mounted to the first through hole (107) of the supporting plate (106) such that the membrane rod (110) extends from the supporting plate (106) into the inner volume (Vi), and
wherein the membrane rod (110) is formed such that the fluid is injectable from the inner volume (Vi) through a peripheral surface of the membrane rod (110) and through a peripheral surface of the membrane straws into the membrane straws and is further exhaustible through the axial rod end and through the first through hole (107) of the supporting plate (106).

2. Filtration vessel (100) according to claim 1,
wherein the slot (109) of the inlet pipe (108) extends along the axial direction.

3. Filtration vessel (100) according to claim 1 or 2, further comprising
a second end cap (111) which is mounted to the second axial end (104) such that a storage volume (Vs) between supporting plate (106) and second end cap (111) is generated.

4. Filtration vessel (100) according to claim 3,
wherein the second end cap (111) comprises a shape of an elliptic paraboloid.

5. Filtration vessel (100) according to one of the claim 1 to 4,
a retainer plate (112) comprising at least one second through hole (113) which is smaller than the first through hole (107) of the supporting plate (106) and smaller than a diameter of the membrane rod (110),
wherein the retainer plate (112) is arranged and formed with respect to the supporting plate (106) such that the first through hole (107) and the second through hole (113) are concentric.

6. Filtration vessel (100) according to one of the claim 1 to 5,
a distribution plate (114) which is arranged within the vessel body (101) and spaced apart from the supporting plate (106) along the axial direction,
wherein the distribution plate (114) comprises at least one third through hole (115) which is larger than the first through hole (107) of the supporting plate (106) and larger than a diameter of the membrane rod (110),
wherein the distribution plate (114) is arranged and formed with respect to the supporting plate (106) such that the first through hole (107) and the second through hole (113) are concentric, and
wherein the membrane rod (110) is inserted through the third through hole (115).

7. Filtration vessel (100) according to one of the claims 1 to 6, further comprising
a fixing ring (202) which is mounted to the second axial end (104),
wherein the fixing ring (202) is further mounted to the supporting plate (106) for mounting the supporting plate (106) to the vessel body (101).

8. Filtration vessel (100) according to one of the claims 1 to 7, further comprising
a ring element which is mounted to the second axial end (104),
wherein the ring element surrounds the supporting plate (106) and forms an edge (201) around the supporting plate (106) such that a liquid is storable inside a volume (Vv) formed by the edge (201) and the supporting plate (106).

9. Method for operating a filtration vessel (100) according to one of the claims 1 to 8, the method comprising
injecting the fluid through the at least one slot (109) of the inlet pipe (108) into the inner volume (Vi) of the vessel body (101),
injecting the fluid from the inner volume (Vi) through the peripheral surface of the membrane rod (110) an through a peripheral surface of the membrane straws into the membrane straws, and
exhausting the fluid through the axial rod end and through the first through hole (107) of the supporting plate (106).

10. Method for cleaning a membrane rod (110) within a filtration vessel (100) according to one of the claims 1 to 8, the method comprising
storing a cleaning liquid within a storage volume (Vs) which is located at an opposite side of the supporting plate (106) with respect to the inner volume (Vi), and
injecting air into the storage volume (Vs) such that the cleaning liquid is pressed through first through hole (107) of the supporting plate (106) and further through the axial rod end of the membrane rod (110) and of the membrane straws into the membrane straws,
wherein the cleaning liquid is exhausted through the peripheral surface of the membrane rod (110) and through the peripheral surface of the membrane straws, respectively, into the inner volume (Vi) of the vessel body (101).

11. Method for detecting a defect membrane rod (110) within a filtration vessel (100) according to one of the claims 1 to 8, the method comprising
storing a liquid within a storage volume (Vs) which is located at an opposite side of the supporting plate (106) with respect to the inner volume (Vi),
injecting air into the inner volume (Vi) of the vessel body (101), and
detecting an appearance of air bubbles within the liquid,
wherein the appearance of air bubbles is indicative of a defect membrane rod (110).
